# DEMANDE DE BREVET EUROPEEN

(11) **EP 0 784 081 A1**
(43) Date de publication de la demande: **16.07.1997**
(21) Numéro de dépôt: 96200055.0
(22) Date de dépôt: 11.01.1996
(51) Int. Cl.: C08L 99/00, C08K 11/00

(54) **Produit en matière plastique comprenant un produit alimentaire**

(71) Demandeur: SOCIETE DES PRODUITS NESTLE S.A., 1800 Vevey (CH)
(72) Inventeur: Fayard, Gilles, 1052 Le Mont S/Lausanne (CH); Hirsbrunner, Pierre, 1802 Corseaux (CH)
(74) Mandataire: Thomas, Alain

(57) **Abrégé**

L'invention concerne un produit en matière plastique, se présentant sous la forme de granulés, de feuilles ou d'emballages, comprenant entre 70 et 95% d'un composé plastique choisi dans le groupe constitué par le polyéthylène, le polystyrène et le polychlorure de vinyle et entre 5 et 30% en poids d'un composé alimentaire en poudre choisi dans le groupe constitué par le café torréfié, le marc de café, le cacao moulu, la pelure de cacao, la tomate, le thé instantané, le thé en feuilles et les épices.

## Description

L'invention concerne un produit en matière plastique, se présentant sous la forme de granulés, de feuilles ou d'emballages et comprenant un produit alimentaire. L'invention concerne en outre le procédé d'obtention dudit produit en matière plastique.

On connaît déjà un procédé , dans lequel on introduit dans une matière plastique une substance odorante : le brevet FR 2542002 concerne un procédé pour modifier l'effet olfactif d'une matière plastique par l'incorporation d'un ou plusieurs terpènes hydrocarbures lors de la fabrication de sac-poubelle. Dans ce brevet, les terpènes introduits dans la matière plastique sont sous forme liquide et présents en une faible quantité et d'autre part, il n'y a pas de référence au domaine alimentaire. Finalement, le procédé d'obtention est restrictif, car il se limite à une utilisation pour l'obtention de films odorants.

Le but de la présente invention est de mettre au point un produit en matière plastique comprenant un produit alimentaire, de manière à ce qu'il dégage une odeur permettant au consommateur de renforcer sa perception sur un produit spécifique. L'invention permet en outre d'envisager un procédé de fabrication de produit de forme quelconque.

L'invention concerne un produit en matière plastique, se présentant sous la forme de granulés, de feuilles ou d'emballages et comprenant entre 70 et 95 % d'un composé plastique choisi dans le groupe constitué par le polyéthylène, le polystyrène et le polychlorure de vinyle et entre 5 et 30 % en poids d'un composé alimentaire en poudre choisi dans le groupe constitué par le café torréfié, le marc de café, le cacao moulu, la pelure de cacao, la tomate, le thé instantané, le thé en feuilles et les épices. Dans la présente description, tous les pourcentages sont en poids.

Le composé alimentaire doit avoir une teneur en eau inférieure à 5%, de préférence comprise entre 2 et 4%. Le produit selon l'invention peut être utilisé de différentes manières. Dans la forme de granulés, il est prévu de le travailler, comme il sera explicité ci-dessous, pour en faire soit des feuilles, soit des emballages, soit d'autres formes. Qu'il soit sous la forme de feuilles ou d'emballages ou d'autres formes, on prévoit pour ce produit selon l'invention au moins trois types d'application. On peut l'utiliser comme emballage primaire, comme emballage secondaire ou comme partie d'un emballage.

Comme emballage primaire, on donne la forme souhaitée au produit selon l'invention, de manière à ce qu'il joue le rôle de conteneur primaire. On peut par exemple envisager la matière plastique contenant du café torréfié, à laquelle on donne la forme de récipient pouvant contenir du café soluble. Le consommateur aura ainsi une perception renforcée de l'odeur du café. La forme du récipient n'est nullement critique et peut être de tout type, par exemple bouteille ou flacons.

Comme emballage secondaire, on peut envisager l'emballage actuel contenant le produit alimentaire, autour duquel on fait un suremballage à base d'une fine feuille du produit selon l'invention. On peut aussi envisager un cartonnage de suremballage contenant une partie du produit selon l'invention.

Comme partie d'un emballage, on peut envisager un bocal classique comportant un couvercle de fermeture dans lequel on a disposé une feuille du produit selon l'invention, de manière à ce qu'au moment de l'ouverture du bocal, le consommateur ait un renforcement de l'odeur du café. Le même raisonnement est bien entendu valable pour tout autre type de produit alimentaire considéré. La feuille a une épaisseur comprise entre 0,5 et 3 mm.

Si on utilise du marc de café, il est bien entendu qu'il y aura moins l'odeur du café, mais dans ce cas on peut aussi considérer l'effet positif obtenu par la coloration du produit selon l'invention.

Dans le cas de l'emballage primaire, l'épaisseur dudit emballage n'est pas critique. On envisage des épaisseurs comprises entre 0,5 et 3 mm.

S'agissant des épices incorporées dans le produit selon l'invention, il peut s'agir de tout type d'épices, en particulier du curcuma, du safran, du poivre, du cumin, du chou de girofle.

Dans le produit en matière plastique selon l'invention, la taille du composé alimentaire est de moins de 0,5 mm, s'agissant de sa granulométrie. De préférence, la taille des particules est comprise entre 0,01 et 0,5 mm.

Dans le cas du produit selon l'invention contenant du café torréfié, si on considère ledit café seul, il est éventé au bout d'une journée. Par contre, le même café emprisonné dans la matière plastique conduit à une lente libération de l'odeur dudit café de sorte qu'il y a une rémanence pendant au moins deux semaines. Pour les autres produits alimentaires considérés selon l'invention, la durée de rémanence est du même ordre.

On utilise selon l'invention comme matière plastique le polyéthylène, le polystyrène et le polychlorure de vinyle, car ces composés sont connus comme étant des matériaux compatibles dans le domaine alimentaire et d'autre part, ils ont un point de fusion égal ou inférieur a 160 °C, c'est-à-dire une température à laquelle les produits alimentaires mélangés ne sont pas dégradés.

L'invention concerne également le procédé de fabrication des granulés , dans lequel on charge un extrudeur avec des granules de composé plastique, on fond dans une première zone ledit composé plastique à une température d'environ 160 °C, on mélange dans une seconde zone de l'extrudeur le composé alimentaire avec le plastique fondu, on extrude un fil qu'on refroidit et qu'on coupe sous forme de granulés.

Le composé plastique et le composé alimentaire sont les mêmes que ceux mentionnés ci-dessus en relation avec le produit.

On travaille avec des extrudeurs rapides, dans lesquels la fusion du composé plastique est faite en une durée comprise entre 20 et 60 sec. et le mélange du composé alimentaire avec le plastique fondu en 10 à 40 sec.

Le produit sort ensuite sous forme de fil liquide et il est refroidi à une température comprise entre 40 et 50 °C dans de l'eau. Ce fil est alors coupé sous forme de granulés ayant une dimension comprise entre 2 et 4 mm.

Sur la base des granulés obtenus, il est possible de fabriquer des feuilles , des emballages ou autres soit par extrusion/soufflage, soit par extrusion/laminage, soit par extrusion/injection.

La suite de la description est faite en référence aux exemples.

### Exemple 1

On introduit dans un extrudeur Clextral double-vis BC-21 du polyéthylène brut en granules et on le porte à une température de 160 °C , de manière à ce qu'il devienne visqueux et qu'il fonde : cette fusion est faite en 25 sec. On introduit dans une seconde étape, par rapport au poids de polyéthylène, 10 % de pelure de cacao de manière à ce que ledit cacao se mélange avec le polyéthylène fondu : ce mélange est fait en 15 sec. Après extrusion sous forme de fil en une durée de 80 sec, refroidissement dans de l'eau à 45 °C et coupe, on obtient des granulés de dimensions comprises entre 2 et 4 mm.

Compte tenu de la faible température dans l'extrudeur, on arrive à obtenir des granulés ayant un fort arôme de cacao et une bonne conservation de la couleur des pelures.

### Exemple 2

On répète le procédé de l'exemple 1, mais on ajoute 20 % de pelures de cacao.

On arrive également à obtenir des granulés à forte odeur de cacao.

### Exemple 3

On répète le procédé de l'exemple 1, avec cette fois une addition de 10 % de café torréfié. On obtient des granulés avec une bonne odeur de café.

Le procédé répété avec respectivement 20 et 30 % de café torréfié permet également d'obtenir des granulés odorants.

### Exemple 4

Avec les granulés fabriqués ci-dessus avec 20 % de café torréfié, on prépare des emballages du type barquettes sur une machine d'extrusion/injection "Bouillon". On arrive à fabriquer des emballages permettant d'avoir une libération lente de l'arôme.

## Revendications

1. Produit en matière plastique, se présentant sous la forme de granulés, de feuilles ou d'emballages, caractérisé en ce qu'il comprend entre 70 et 95 % d'un composé plastique choisi dans le groupe constitué par le polyéthylène, le polystyrène et le polychlorure de vinyle et entre 5 et 30 % en poids d'un composé alimentaire en poudre choisi dans le groupe constitué par le café torréfié, le marc de café, le cacao moulu, la pelure de cacao, la tomate, le thé instantané, le thé en feuilles et les épices.

2. Produit en matière plastique selon la revendication 1, caractérisé en ce que le composé alimentaire a une dimension de particules de moins de 0,5 mm.

3. Produit en matière plastique selon la revendication 2, caractérisé en ce que le composé alimentaire a une dimension de particules comprise entre 0,01 et 0,5 mm.

4. Procédé pour la fabrication de granulés selon l'une des revendications 1 à 3, caractérisé en ce qu'on charge un extrudeur avec des granules de composé plastique, on fond dans une première zone ledit composé plastique à une température d'environ 160 °C, on mélange dans une seconde zone de l'extrudeur le composé alimentaire avec le plastique fondu, on extrude un fil qu'on refroidit et qu'on coupe sous forme de granulés.

5. Procédé selon la revendication 4, caractérisé en ce que la fusion du composé plastique est faite en une durée comprise entre 20 et 60 sec. et le mélange du composé alimentaire avec le plastique fondu en 10 à 40 sec.

6. Procédé selon l'une des revendications 4 ou 5, caractérisé en ce qu'on refroidit le fil extrudé à une température comprise entre 20 et 60 °C dans de l'eau et on coupe sous forme de granulés ayant une dimension comprise entre 2 et 4 mm.

7. Procédé selon l'une des revendications 4 à 6, caractérisé en ce qu'on fond les granulés obtenus selon l'une des revendications 4 à 6 pour en faire des films, des emballages ou autres par extrusion/soufflage, extrusion/laminage ou extrusion/injection.
